# EUROPEAN PATENT APPLICATION

(11) **EP 4 779 627 A1**
(43) Date of publication of application: **22.07.2026**
(21) Application number: 24864353.8
(22) Date of filing: 13.08.2024
(51) Int. Cl.: G09G 3/34, G02F 1/00

(54) **DRIVING METHOD FOR DISPLAY APPARATUS AND DISPLAY APPARATUS**

(30) Priority: 13.09.2023 CN 202311177460
(71) Applicant: HKC CORPORATION LIMITED, Shenzhen, Guangdong 518000 (CN)
(72) Inventor: MU, Chengchen, Shenzhen, Guangdong 518000 (CN); YE, Lidan, Shenzhen, Guangdong 518000 (CN)
(74) Representative: Winter, Brandl - Partnerschaft mbB
(86) International application number: PCT/CN2024/111655
(87) International publication number: WO 2025/055630

(57) **Abstract**

A driving method for a display device and a display device are disclosed. The display device includes a display panel and a backlight module. The backlight module includes a light plate, multiple LED lights, and a control module that controls the number of LED lights to be lit. The driving method includes: obtaining grayscale values of a next frame of all pixels in the display panel corresponding to a current partition, and generating a driving current signal and a control signal; and controlling the corresponding LED light or lights according to the control signal. The driving current signal and the control signal jointly control the grayscale display of the pixels of the display panel corresponding to each partition.

## Description

### TECHNICAL FIELD

The present application relates to the field of display technology, and more particularly relates to a driving method of a display device and a display device.

### BACKGROUND

Currently, more and more display products use Mini LED as the backlight source. Mini LED employs a direct-lit design with small-pitch LEDs, thereby achieving local dimming in smaller areas through a high-density distribution. Compared with related backlight designs, it delivers better brightness uniformity and higher color contrast within a shorter optical mixing distance, so that it makes ultra-thin terminal product designs possible and reduces power consumption.

The related Mini LED backlight control technology may adopt a one-to-one control method, where each controlled lighting partition corresponds to the control channel of one constant-current drive chip. When the number of partitions reaches more than a thousand, the number of constant-current control chips will increase sharply, resulting in a significant consumption of chips. The mini LED technology may be understood as a comprehensive upgraded version of LCD. By dynamically controlling the brightness of the backlight in each partition, the dark areas become darker, thereby greatly improving the contrast. However, the brightness transition uniformity of some intermediate grayscales is relatively poor so that a smooth transition cannot be achieved.

### SUMMARY

One purpose of this application is to provide a driving method of a display device and a display device, whereby each partition is further divided and the numbers of LEDs that are turned on and off in each partition are controlled, thereby improving the brightness uniformity of intermediate grayscales and achieving a smooth transition.

This application discloses a driving method of a display device. The display device includes a display panel and a backlight module that provides backlight for the display panel. The backlight module includes a light plate and a plurality of LED lights disposed on the light plate. The plurality of LED lights are divided into a plurality of partitions. Each partition includes at least four LED lights that are coupled in series, and further includes a control module that controls the number of LED lights that are lit. The driving method includes:
obtaining grayscale values of a next frame of all pixels in the display panel corresponding to a current partition, and generating a driving current signal and a control signal; and
controlling, by the control module, the corresponding LED light or lights to be lit according to the control signal;
where the driving current signal and the control signal jointly control the grayscale display of the pixels of the display panel corresponding to the current partition.

This application further discloses a display device that is driven using any one of the driving methods as described above. The display device includes a grayscale signal generation module and a driving current generation module. The grayscale signal generation module is coupled to the driving current generation module. The control module is coupled to the grayscale signal generation module. The driving current module generates a driving current signal based on a grayscale value of the grayscale signal generation module and outputs it to the corresponding LED light or lights. The control module generates a control signal based on the grayscale value of the grayscale signal generation module to control the number of LED lights that are lit. The display device is driven using the following driving method, which includes:
obtaining grayscale values of a next frame of all pixels in the display panel corresponding to a current partition, and generating a driving current signal and a control signal; and
controlling, by the control module, the corresponding LED light or lights to be lit according to the control signal;
where the driving current signal and the control signal jointly control the grayscale display of the pixels of the display panel corresponding to the current partition.

This application further discloses a display device. The display device includes a grayscale signal generation module and a driving current generation module. The grayscale signal generation module is coupled to the driving current generation module. The control module is coupled to the grayscale signal generation module. The driving current module generates a driving current signal based on a grayscale value of the grayscale signal generation module and outputs it to the corresponding LED light or lights. The control module generates a control signal based on the grayscale value of the grayscale signal generation module to control the number of LED lights that are lit. The display device is driven using the following driving method, which includes:
computing and comparing the grayscale values of all pixels against each other to obtain the maximum grayscale value, and generating a driving current signal and a control signal based on the computed maximum grayscale value; and
controlling, by the control module, the corresponding LED light or lights to be lit according to the control signal;
where the driving current signal and the control signal jointly control the grayscale display of the pixels of the display panel corresponding to the current partition.

Compared with related backlight solutions where LEDs are either all on or all off simultaneously, this application implements a control module within each partition to allow some LEDs to be lit and others to be off, so that the numbers of LEDs that are lit and off can be selectively controlled. By varying the number of LEDs that are lit, different grayscale displays can be achieved, resulting in more uniform brightness transitions at intermediate grayscales. This method helps to avoid poor display uniformity and ensures smooth transitions.

### BRIEF DESCRIPTION OF DRAWINGS

The accompanying drawings are used to provide a further understanding of the embodiments according to the present application, and constitute a part of the specification. They are used to illustrate the embodiments according to the present application, and explain the principles of the present application in conjunction with the text description. Apparently, the drawings in the following description merely represent some embodiments of the present disclosure, and for those having ordinary skill in the art, other drawings may also be obtained based on these drawings without investing creative efforts. In the drawings:
FIG. 1 is a flowchart of a driving method according to a first embodiment of the present application.
FIG. 2 is a schematic diagram of a display device according to the first embodiment of the present application.
FIG. 3 is a schematic diagram of a partition of the display device according to the first embodiment of this application.
FIG. 4 is a flowchart of a driving method according to a second embodiment of this application.
FIG. 5 is a schematic diagram of a partition of a display device according to a third embodiment of this application.
FIG. 6 is a schematic diagram of another partition of the display device according to the third embodiment of this application.
FIG. 7 is a flowchart of a driving method according to the third embodiment of this application.
FIG. 8 is a schematic diagram of a display device according to a fourth embodiment of this application.
FIG. 9 is a flow diagram of a driving method according to the fourth embodiment of this application.
FIG. 10 is a schematic diagram of a display device according to a fifth embodiment of the present application.
FIG. 11 is a schematic diagram of a display device according to a sixth embodiment of the present application.
FIG. 12 is a schematic diagram of a display device according to a seventh embodiment of the present application.
FIG. 13 is a schematic diagram of a display device according to an eighth embodiment of the present application.

In the drawings: 100, display device; 110, display panel; 111, pixel; 120, backlight module; 130, partition; 140, control module; 141, control signal generation unit; 150, brightness detection module; 160, timing module; 170, compensation signal module; 180, grayscale signal generation module; 190, driving current generation module; 200, first computation module; 210, second computation module; Q1-first active switch; Q2-second active switch; Q3-third active switch; Q4-fourth active switch; Q5-fifth active switch; Q6-sixth active switch; LED1-first LED light; LED2-second LED light; LED3-third LED light; LED4-fourth LED light; LED5-fifth LED light; LED6-sixth LED light; LED7-seventh LED light; LED8-eighth LED light; LED9-ninth LED light.

### DETAILED DESCRIPTION OF EMBODIMENTS

It should be understood that the terms used herein, the specific structures arrangements, and the functional details disclosed herein are merely representative for describing some specific embodiments, but the present application may be implemented in many alternative forms and should not be construed as being limited to only these embodiments described herein.

As used herein, terms "first", "second", or the like are merely used for illustrative purposes, and shall not be construed as indicating relative importance or implicitly indicating the number of technical features specified. Thus, unless otherwise specified, the features defined by "first" and "second" may explicitly or implicitly include one or more of such features. Terms "multiple", "a plurality of", and the like mean two or more. Terms "comprise", "comprising", "includes", "including", and any variations thereof are intended to be non-exclusive, and one or more other features, integers, steps, operations, units, components, and/or combinations thereof may be present or be added.

In addition, terms "center" "lateral", "up", "down", "left", "right", "vertical", and "horizontal", "top", "bottom", "inside", or the like are used to indicate orientational or relative positional relationships based on those illustrated in the drawings. They are merely intended for simplifying the description of the present disclosure, rather than indicating or implying that the device or element referred to must have a particular orientation or be constructed and operate in a particular orientation. Therefore, these terms are not to be construed as restricting the present disclosure.

In addition, unless otherwise clearly specified and defined, the terms "installed on", "mounted on", "disposed on", "arranged on", "coupled to", and "connected to" should be understood in a broad sense. For example, it may be a fixed connection, a detachable connection, or an integral connection; it may be a mechanical connection or an electrical connection; it may be a direct connection or an indirect connection through an intermediate medium, or it may also be internal communication between two elements. For those of ordinary skill in the art, the specific meanings of the above terms as used in the present application can be understood depending on specific contexts.

The present application will be described in detail below with reference to the accompanying drawings and some optional embodiments.

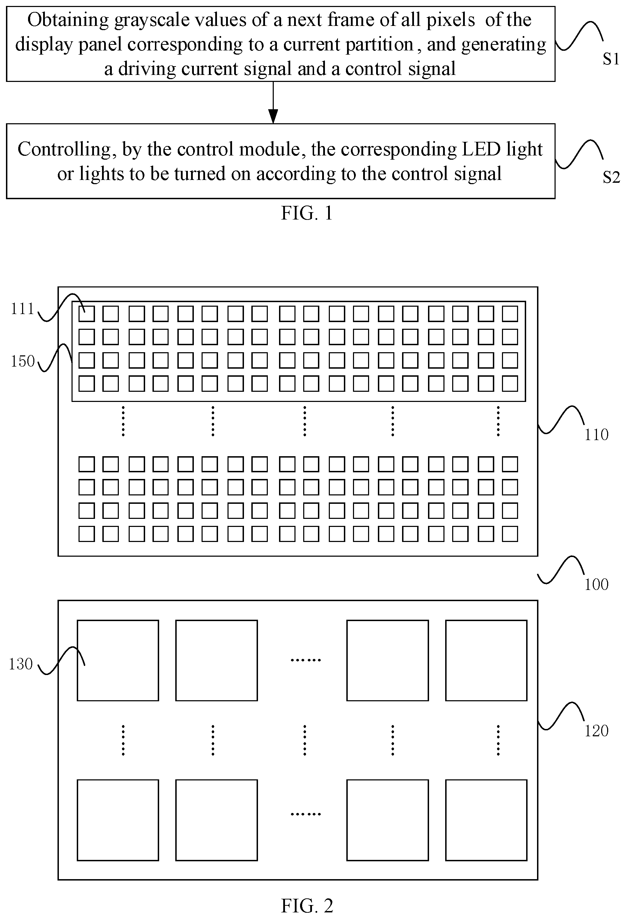

The following description of the first embodiment of this application refers to FIGS. 1 to 3. As illustrated in FIG. 1, as a first embodiment of this application, a driving method of a display device 100 is disclosed. The display device 100 primarily uses mini-LED, but this does not mean that the solutions in this application are limited to mini-LED. They may also be applied to display devices 100 that use LED or micro-LED as the backlight. Referring to FIGS. 1 to 3, the display device 100 includes a display panel 110 and a backlight module 120 that provides backlight for the display panel 110. The backlight module 120 includes a light plate and a plurality of LED lights disposed on the light plate. The plurality of LED lights are divided into multiple partitions 130. Each partition 130 includes at least four LED lights that are coupled in series, and further includes a control module 140 that controls the number of LED lights that are lit. The driving method includes:
S1: obtaining the grayscale values of a next frame of all pixels 111 in the display panel 110 corresponding to a current partition 130, and generating a driving current signal and a control signal; and
S2: controlling, by the control module140, the corresponding LED light or lights to be lit according to the control signal;
where the driving current signal and the control signal jointly control the grayscale display of the pixels 111 of the display panel 110 corresponding to the current partition 130.

This embodiment breaks the limitation where the LEDs in one partition 130 can only be fully turned off or fully turned on, by further dividing 130 the plurality of LEDs within one partition 130. Each partition 130 includes at least four LED lights that are coupled in series, and a control module 140 that controls the number of LED lights that are lit. By setting up the control module 140, some LEDs within a partition can be lit while others remain off, so that the number of lit LEDs can be selectively controlled. By varying the number of lit LEDs, different grayscale displays can be achieved, resulting in more uniform brightness transitions at intermediate grayscales. This helps to avoid poor display uniformity and ensures a smooth transition.

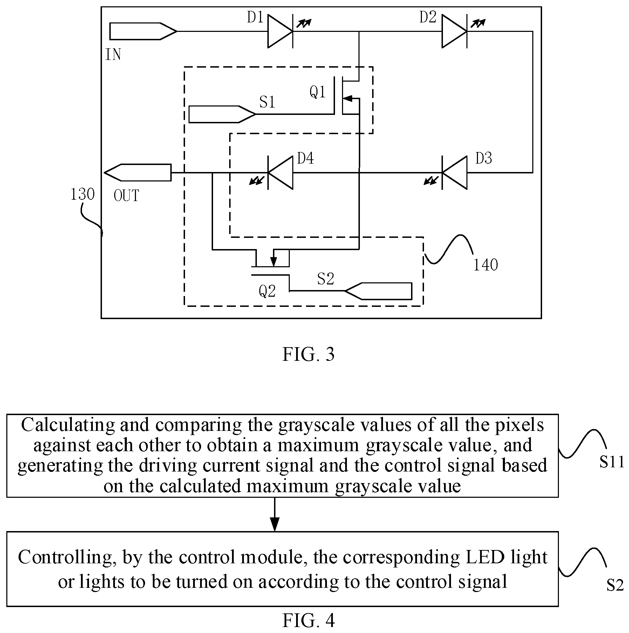

Referring to FIGS. 2 and 3, where four LED lights are taken as an example, the control module 140 includes control signal input terminals corresponding to two active switches. The four LED lights include a first LED light D1, a second LED light D2, a third LED light D3, and a fourth LED light D4. The two active switches include a first active switch Q1 and a second active switch Q2. When the grayscale values of the pixels 111 corresponding to the backlight are obtained, a driving current signal and a control signal are generated accordingly. If only one LED light needs to be lit, the control module 140 may generate control signals to control the first active switch Q1 and the second active switch Q2 to be turned on. Accordingly, the driving current signal is directly input from the first LED light D1 and output through the first active switch Q1 and the second active switch Q2. The remaining three LED lights are short-circuited and so do not light up. If two LED lights need to be lit, the first active switch Q1 is controlled to be turned on, so that the first LED light D1 and the fourth LED light D4 may light up, while the rest may not light up. If three LED lights need to be lit, the second active switch Q2 is controlled to be turned on, so that the first LED light D1, the second LED light D2, and the third LED light D3 may light up, and the rest will not light up. If four LED lights need to be lit, the first active switch Q1 and the second active switch Q2 are controlled to be turned off, and so the first LED light D1, the second LED light D2, the third LED light D3, and the fourth LED light D4 are all lit up. That is, controlling the ON or OFF of the active switches can make different LEDs light up, thereby achieving a smooth transition of grayscale changes. Unlike the previous approaches, where all four LEDs would either be fully turned on or fully turned off, causing relatively large brightness fluctuations and poor display quality, this method eliminates such issues.

Further, operation S1 includes:
S11: summing the grayscale values of all pixels 111 and calculating an average value, and generating the driving current signal and the control signal based on the calculated average grayscale value.

In order to make the grayscale display of the pixels 111 corresponding to each partition 130 more uniform, while also avoiding excessive power consumption of the LEDs and large brightness differences in the grayscale display of the pixels 111, the grayscale values of the pixels 111 corresponding to each partition 130 are summed and averaged. The average grayscale value is then used to generate a driving current signal and a control signal. The driving current signal is output to the LEDs, and the control signal is used to control the ON and OFF of the corresponding LEDs. Additionally, in place of using the average grayscale value to generate the driving current signal and the control signal, the driving current signal and the control signal may also be generated based on a median grayscale value or a maximum grayscale value of all the pixels 111.

As illustrated in FIG. 4, as a second embodiment of the present application, with reference to FIGS. 2 and 4, the display device 100 further includes a brightness detection module 150. When the next frame is displayed as the current frame, the brightness detection module 150 detects the brightness value of the grayscale display of the current frame. If the brightness value detected by the brightness detection module 150 is less than a preset value, the following operations are executed:
S11': calculating and comparing the grayscale values of all pixels 111 against each other to obtain the maximum grayscale value, and generating the driving current signal and the control signal based on the calculated maximum grayscale value.

Considering that if the average grayscale value of the pixels 111 is used to generate the corresponding driving current signal and control signal, it may cause the final display brightness of some pixels 111 to fail to meet the requirements, leading to a situation where the actual brightness may be darker than the target brightness. At this time, compensation may be performed using other methods. For example, the data line voltage(s) corresponding to the pixel(s) 111 may be increased. However, the increase in data line voltage has a limited effect on brightness. Affected by the wire resistance of the data line, there is still loss, resulting in insufficient compensation. This embodiment mainly compensates through the backlight. When the actual brightness value detected by the brightness detection module 150 is smaller than the preset value, i.e., the target value, the average grayscale value is no longer used to generate the driving current signal and the control signal during the next display cycle. Instead, the maximum grayscale value is used to generate the driving current signal and the control signal, thereby increasing the brightness of the LEDs and improving the display brightness of the pixels 111.

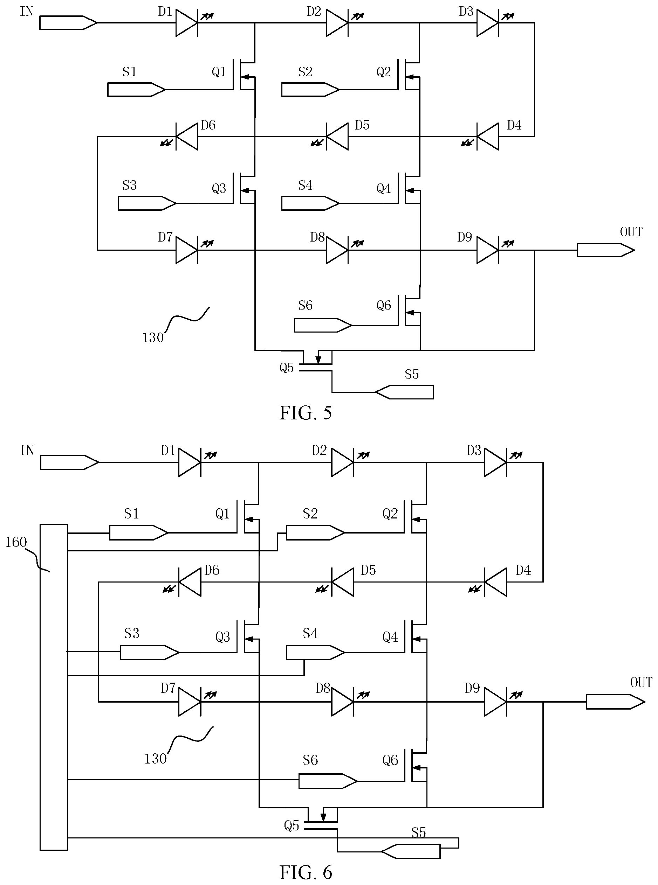

As illustrated in FIGS. 5 to 7, as a third embodiment of this application, it is directed towards a further refinement of the above embodiments. The partition 130 includes nine LED lights that are coupled in series, namely a first LED light D1, a second LED light D2,..., and a ninth LED light D9. The control module 140 includes six active switches, namely a first active switch Q1, a second active switch Q2..., and a sixth active switch Q6. There are six corresponding control signals, which are input to the control terminals of the six active switches. The input terminal of the first active switch Q1 is coupled between the first LED light D1 and the second LED light D2, and the output terminal of the first active switch Q1 is coupled between the fifth LED light D5 and the sixth LED light D6. The input terminal of the second active switch Q2 is coupled between the second LED light D2 and the third LED light D3, and the output terminal of the second active switch Q2 is coupled between the fourth LED light D4 and the fifth LED light D5. The input terminal of the third active switch Q3 is coupled between the fifth LED light D5 and the sixth LED light D6, and the output terminal of the third active switch Q3 is coupled between the seventh LED light D7 and the eighth LED light D8. The input terminal of the fourth active switch Q4 is coupled between the fourth LED light D4 and the fifth LED light D5, and the output terminal of the fourth active switch Q4 is coupled between the eighth LED light D8 and the ninth LED light D9. The input terminal of the fifth active switch Q5 is coupled between the seventh LED light D7 and the eighth LED light D8, and the output terminal of the fifth active switch Q5 is coupled to the output terminal of the ninth LED light D9. The input terminal of the sixth active switch Q6 is coupled between the eighth LED light D8 and the ninth LED light D9, and the output terminal of the sixth active switch Q6 is coupled to the output terminal of the ninth LED light D9. The operation S2 includes:
S21: inputting six control signals (S1, S2, S3, S4, S5, S6) to the control terminals of the six active switches respectively to control the corresponding active switches to be turned on or off so as to light up the corresponding LED lights to achieve different grayscale displays of the same partition 130.

This embodiment mainly uses nine LEDs as an example for explanation. The nine LEDs are coupled in series to provide the backlight brightness for the partition 130. In addition to the nine LEDs, six active switches are added to control the backlight brightness of the partition 130. From the following table, it can be seen that the corresponding grayscale displays can be obtained by controlling different active switches to be turned on or off.

**Table 1**

| Corresponding grayscales | Number of lit LED lights | Active switch control |
|---|---|---|
| 0 | 0 | No voltage or current is input to IN |
| 1-32 | 1 | Q1/Q3/Q5 are turned on, the rest are turned off; |
| 33-64 | 2 | Q2/Q4/Q6 are turned on and the rest are turned off; or Q1/Q3/Q6 are turned on and the rest are turned off; |
| 65-96 | 3 | Q2/Q4 are turned on and the rest are turned off; or Q1/Q5 are turned on and the rest are turned off; or Q1/Q3 are turned on and the rest are turned off; or Q1/Q2/Q3/Q5 are turned on and the rest are turned off; |
| 97-128 | 4 | Q4/Q6 are turned on and the rest are turned off; or Q1/Q6 are turned on and the rest are turned off; or Q2/Q3/Q6 are turned on and the rest are turned off; |
| 129-160 | 5 | Q4 is turned on and the rest are turned off; or Q1 is turned on and the rest are turned off; or Q3/Q5 are turned on and the rest are turned off; or Q2/Q5 are turned on and the rest are turned off; or Q2/Q3 are turned on and the rest are turned off; |
| 161-192 | 6 | Q2/Q6 are turned on and the rest are turned off; or Q3/Q6 are turned on and the rest are turned off; |
| 193-224 | 7 | Q5 is turned on and the rest are turned off; or Q3 is turned on and the rest are turned off; |
| 225-254 | 8 | Q6 is turned on, the rest are turned off; |
| 255 | 9 | All turned off; |

Table 1 above can be obtained from FIG. 5. By controlling the corresponding active switches Q to turn on or off, the actual number of LED lights lit is obtained, thereby achieving the display of the corresponding grayscale value. The more LED lights are lit, the greater the grayscale value, meaning it is not limited to simultaneous turning on or turning off, it enables a uniform transition from 0 to 255 grayscales, making the grayscale brightness display of the pixels 111 more uniform and delicate, thereby improving the display effect of the entire display panel 110.

Furthermore, from the above table, it can be seen that when the number of lit LED lights is in the range of 2-7, a variety of different conduction methods can be used to achieve the same purpose. Although the number of lit LEDs remains unchanged when different active switches are turned on, the actual positions of the lit LEDs may differ. That is to say, after different active switches are turned on, in the first conduction mode, LED1 and LED2 may light up, while the others may not light up. In the second conduction mode, LED1 and LED8 may light up, but the others may not light up. The number of lit LEDs is the same in both conduction methods, but the actual LEDs lit are different. In this case, one of the conduction methods may be used for conduction. However, under long-term use, this may cause certain LEDs to be used for much longer periods than others. As illustrated in FIG. 6, a timing module 160 is disposed in the display device 100, which separately keeps track of the lighting duration of each LED. Operation S21 includes:
S211: when the grayscale display value of the current frame is equal to that of the next frame in one same partition 130, if the number of LED lights that need to be lit is 2, then if the lighting durations of all LED lights are equal, controlling the second active switch Q2, the fourth active switch Q4, and the sixth active switch Q6 to turn on in the current frame, and other active switches to turn off, so that the first LED light D1 and the second LED light D2 light up; in the next frame, controlling the first active switch Q1, the third active switch Q3, and the sixth active switch Q6 to turn on, and other active switches to turn off, so that the first LED light D1 and the eighth LED light D8 light up.

Under long-term use, LED lights may be prone to aging or an increased probability of burning out. Therefore, the lighting duration of each LED should first be monitored. When two LEDs are needed for display, if LED1 and LED2 are continuously used, the usage time of LED1 and LED2 will increase. Considering that two LEDs in the partition 130 can also be displayed by changing the ON and Off states of other active switches, such as LED1 and LED8, once it is found that the lighting duration of LED2 is much greater than the lighting duration of LED8, the second conduction method can be activated. This would turn on LED1 and LED8, thus reducing the lighting duration of LED2 and ensuring the service life of LED2.

Additionally, considering that LED1 is the one that stays lit for long durations, with its lighting duration being much greater than that of the other LEDs, a backup LED1' may be set up specifically for LED1. When the lighting duration of LED1 exceeds a certain threshold, the backup LED1' may be used, meaning that LED1 and LED1' can be used alternately, thereby increasing the service life of LED1.

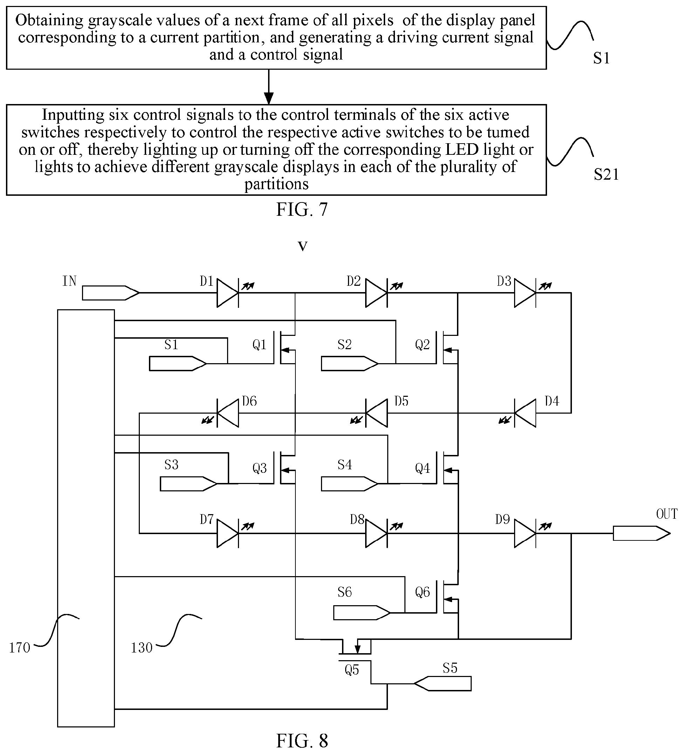

As illustrated in FIGS. 8 to 9, as a fourth embodiment of this application, it is a further improvement based on the third embodiment above. Referring to FIGS. 2, 8 to 9, the display device 100 further includes a brightness detection module 150. When the next frame is displayed as the current frame, the brightness detection module 150 may detect the brightness value of the grayscale display of the current frame. The display device 100 includes a compensation signal module 170, which outputs corresponding compensation signals to the control terminals of the six active switches respectively. If the brightness value detected by the brightness detection module 150 is less than the preset value, the following operations are executed:

S3: outputting a compensation signal to the control terminal of the corresponding active switch to control the corresponding active switch to be turned on, thereby increasing the number of lit LEDs.

This embodiment differs from the above embodiments in that a compensation signal module 170 is added. The compensation signal module 170 can turn on active switches that do not otherwise need to be turned on, so that the number of LED lights that are turned on is more than the number of LED lights that originally need to be turned on. By increasing the number of lit LEDs, the brightness of the partition 130 is increased, thus avoiding insufficient grayscale display brightness for the pixels 111.

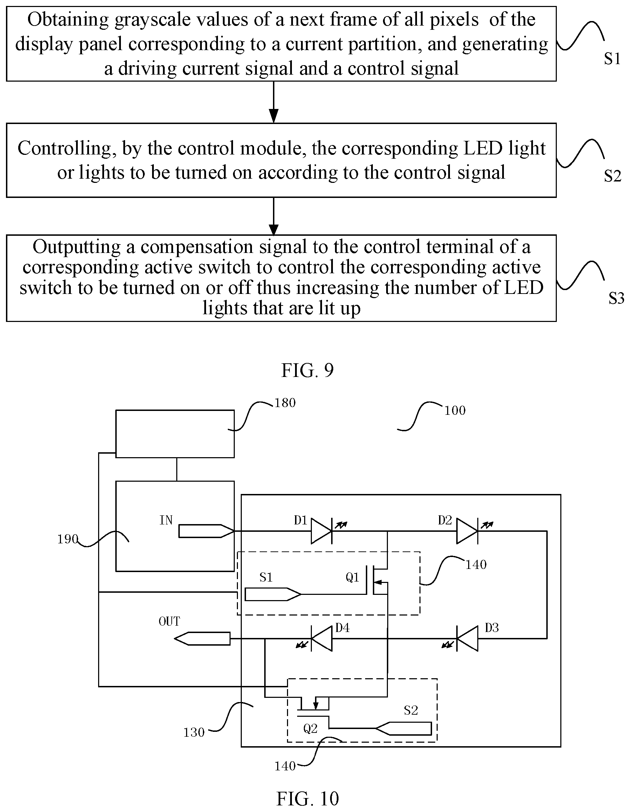

As illustrated in FIG. 10, as a fifth embodiment of this application, a display device 100 is disclosed, which is driven using the driving method described in any one of the above embodiments. The display device 100 includes a grayscale signal generation module 180 and a driving current generation module 190. The grayscale signal generation module 180 is coupled to the driving current generation module 190. The control module 140 is coupled to the grayscale signal generation module 180. The driving current module generates a driving current signal based on a grayscale value of the grayscale signal generation module 180 and outputs it to the LED light(s). The control module 140 generates a control signal based on the grayscale value of the grayscale signal generation module 180 to control the number of lit LED lights.

The driving current generation module 190 is coupled to the series-coupled LEDs and supplies a current corresponding to the grayscale to the LEDs. The control module 140 generates a corresponding control signal based on the grayscale value to control the LED lights to be turned on or off. The grayscale or brightness adjustment of the partition 130 is jointly controlled by the driving current signal and the control signal. The driving current signal and the control signal jointly control the number of LEDs lit in the corresponding partition 130, in order to control the different grayscale displays of the pixels 111 in the display panel 110, thereby improving the brightness uniformity of the intermediate grayscales and achieving a smooth transition.

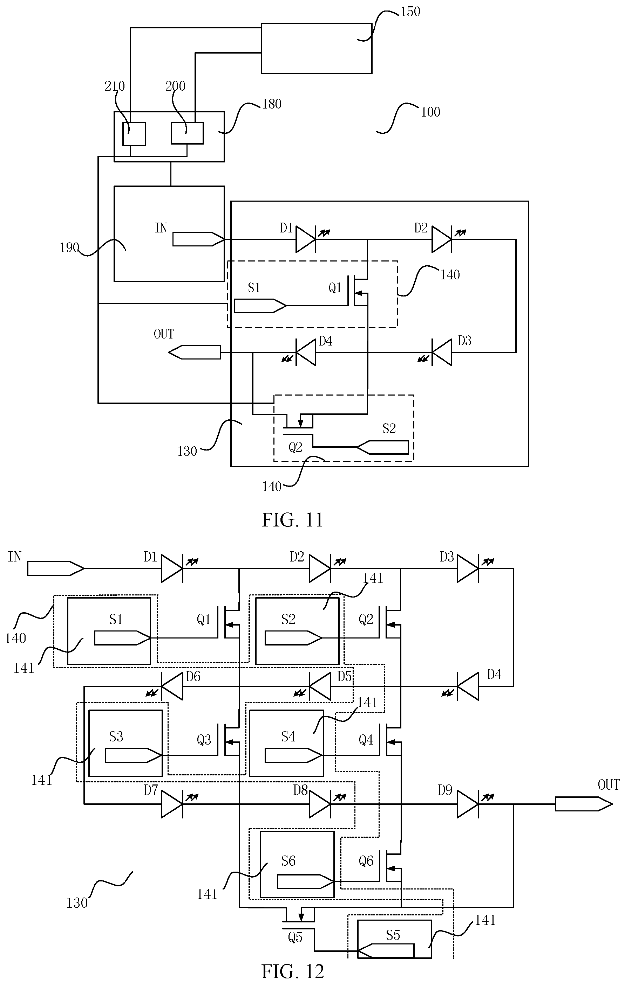

As illustrated in FIG. 11, as a sixth embodiment of this application, it is directed towards further limitations based on the above fifth embodiment. Referring to FIGS. 2 and 11, the display device 100 further includes a brightness detection module 150, which is configured to detect the brightness value of the grayscale display of the current frame. The brightness detection module 150 is coupled to the grayscale signal generation module 180. The display device 100 includes a first computing module 200 and a second computing module 210 that are each coupled to the brightness detection module 150. The first computing module 200 obtains and calculates the average grayscale value of the grayscale values of all pixels 111 from the grayscale signal generation module 180. The second computing module 210 obtains and calculates the grayscale value differences of all pixels 111 from the grayscale signal generation module 180, and obtains the maximum grayscale value. The driving current module generates the corresponding driving current signal based on the average grayscale value or the maximum grayscale value. The control module 140 generates a control signal to control the number of lit LED lights based on the average grayscale value or the maximum grayscale value.

The two computation modules calculate the average grayscale value and the maximum grayscale value, respectively. Generally, the corresponding driving current signal and control signal are generated using the average grayscale value. However, if the use of the driving current signal and control signal generated by using the average value ultimately makes the grayscale display brightness of the pixels 111 relatively low, then the average grayscale value does not need to be used to generate the corresponding driving current signal and control signal. Instead, the maximum grayscale value may be used to generate the current drive signal and the control signal. Different grayscale values result in different magnitudes of the driving current signal, which in turn causes the brightness of each LED to vary. The control signal only needs to control the number of corresponding LED lights to be lit, so the original control signal can still be used. This avoids the need to regenerate the control signal and reduces the response time for lighting up the LEDs.

As illustrated in FIG. 12, as a seventh embodiment of this application, it is directed towards further refinements and limitations based on the above embodiments. Each partition 130 includes nine LED lights that coupled in series, namely a first LED light D1, a second LED light D2..., and a ninth LED light D9. The nine LED lights are arranged in a grid of three rows and three columns. When all nine LED lights are lit, the driving current signal is input sequentially from the first LED light D1 to the second LED light D2, to the third LED light D3, and so on, up to the ninth LED light D9.

The control module 140 includes six active switches, namely a first active switch Q1, a second active switch Q2..., and a sixth active switch Q6. There are six corresponding control signals, which are input to the control terminals of the six active switches respectively. The input terminal of the first active switch Q1 is coupled between the first LED light D1 and the second LED light D2, and the output terminal of the first active switch Q1 is coupled between the fifth LED light D5 and the sixth LED light D6. The input terminal of the second active switch Q2 is coupled between the second LED light D2 and the third LED light D3, and the output terminal of the second active switch Q2 is coupled between the fourth LED light D4 and the fifth LED light D5. The input terminal of the third active switch Q3 is coupled between the fifth LED light D5 and the sixth LED light D6, and the output terminal of the third active switch Q3 is coupled between the seventh LED light D7 and the eighth LED light D8. The input terminal of the fourth active switch Q4 is coupled between the fourth LED light D4 and the fifth LED light D5, and the output terminal of the fourth active switch Q4 is coupled between the eighth LED light D8 and the ninth LED light D9. The input terminal of the fifth active switch Q5 is coupled between the seventh LED light D7 and the eighth LED light D8, and the output terminal of the fifth active switch Q5 is coupled to the output terminal of the ninth LED light D9. The input terminal of the sixth active switch Q6 is coupled between the eighth LED light D8 and the ninth LED light D9, and the output terminal of the sixth active switch Q6 is coupled to the output terminal of the ninth LED light D9.

The control module 140 further includes six control signal generation units 141. The six control signal generation units 141 generate corresponding control signals (S1, S2, S3, S4, S5, S6) and output them to the control terminals of the six active switches respectively to control the turning on or off of the corresponding active switches to light up the corresponding LED lights to achieve different grayscale displays of the same partition 130.

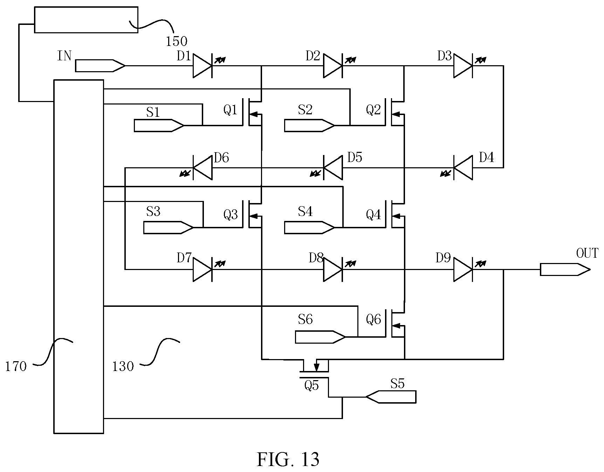

As illustrated in FIG. 13, as an eighth embodiment of this application, it is directed towards further refinements and limitations based on the above embodiments. The display device 100 includes compensation signal module 170, which is coupled to the brightness detection module 150. The brightness detection module 150 may detect that the brightness is lower than a preset value, generate a compensation signal, and output it to the compensation signal module 170. The compensation signal module 170 is separately coupled to the control terminals of the six active switches. The compensation signal module 170 controls the corresponding active switch(es) to turn on based on whether the corresponding LED light lights up and the compensation signal.

It should be noted that the limitations of the various operations involved in this solution are not to be interpreted to limit the order of the operations, under the premise of not affecting the implementation of the specific solution. The operations written earlier can be executed first, or later, or even at the same time with the operations written later. As long as this solution can be implemented, it should be regarded as falling in the scope of protection of this application.

It should be noted that the inventive concept of the present application can be formed into many embodiments, but the length of the application document is limited and so these embodiments cannot be enumerated one by one. Therefore, should no conflict be present, the various embodiments or technical features described above can be arbitrarily combined to form new embodiments. After the various embodiments or technical features are combined, the original technical effects may be enhanced.

The foregoing is a further detailed description of the present application with reference to some specific optional implementations, but it cannot be determined that the specific implementation of the present application is limited to these implementations. For those having ordinary skill in the technical field to which the present application pertains, several deductions or substitutions may be made without departing from the concept of the present application, and all these deductions or substitutions should be regarded as falling in the scope of protection of the present application.

## Claims

1. A driving method of a display device, the display device comprising a display panel and a backlight module configured to provide backlight for the display panel; wherein the backlight module comprises a light plate and a plurality of LED lights disposed on the light plate, the plurality of LED lights being divided into a plurality of partitions; wherein each of the plurality of partitions comprises at least four LED lights that are coupled in series, and further comprises a control module configured to control a number of LED lights to be lit up; wherein the driving method comprises:
obtaining grayscale values of a next frame of all pixels in the display panel corresponding to a current partition, and generating a driving current signal and a control signal; and
controlling, by the control module, the corresponding LED light or lights to be turned on according to the control signal;
wherein the driving current signal and the control signal are configured to jointly control a grayscale display of all the pixels of the display panel corresponding to the current partition.

2. The driving method as recited in claim 1, wherein the operation of obtaining the grayscale values of the next frame of all pixels in the display panel corresponding to the current partition and generating the driving current signal and the control signal comprises:
summing the grayscale values of all the pixels and calculating an average value; and generating the driving current signal and the control signal based on the calculated average grayscale value.

3. The driving method as recited in claim 2, wherein the display device further comprises a brightness detection module; wherein when the next frame is displayed as the current frame, the brightness detection module is configured to detect a brightness value of grayscale display of the current frame;
in response to an event that the brightness value detected by the brightness detection module is less than a preset value, performing the following operations: calculating and comparing the grayscale values of all the pixels against each other to obtain a maximum grayscale value; and generating the driving current signal and the control signal based on the calculated maximum grayscale value.

4. The driving method as recited in claim 1, wherein each of the plurality of partitions comprises nine LED lights that are sequentially coupled in series, including a first LED light, a second LED light..., and a ninth LED light; wherein the control module comprises six active switches, including a first active switch, a second active switch..., and a sixth active switch; wherein the control signal comprises six control signals, which are configured to be input to the control terminals of the six active switches, respectively;
wherein an input terminal of the first active switch is coupled between the first LED light and the second LED light, and an output terminal of the first active switch is coupled between the fifth LED light and the sixth LED light; wherein an input terminal of the second active switch is coupled between the second LED light and the third LED light, and an output terminal of the second active switch is coupled between the fourth LED light and the fifth LED light; wherein an input terminal of the third active switch is coupled between the fifth LED light and the sixth LED light, and an output terminal of the third active switch is coupled between the seventh LED light and the eighth LED light;
wherein an input terminal of the fourth active switch is coupled between the fourth LED light and the fifth LED light, and an output terminal of the fourth active switch is coupled between the eighth LED light and the ninth LED light; wherein an input terminal of the fifth active switch is coupled between the seventh LED light and the eighth LED light, and an output terminal of the fifth active switch is coupled to an output terminal of the ninth LED light; wherein an input terminal of the sixth active switch is coupled between the eighth LED light and the ninth LED light, and an output terminal of the sixth active switch is coupled the output terminal of the ninth LED light;
wherein the operation of controlling by the control module the corresponding LED light or lights to be turned on according to the control signal comprises:
inputting the six control signals to the control terminals of the six active switches respectively to control the respective active switches to be turned on or off, thereby lighting up the corresponding LED light or lights to achieve different grayscale displays in each same partition.

5. The driving method as recited in claim 4, wherein the display device comprises a timing module configured to separately time a lighting duration of each of the plurality of LED lights, and wherein the operation of inputting the six control signals to the control terminals of the six active switches respectively to control the respective active switches to be turned on or off thereby lighting up the corresponding LED light or lights to achieve different grayscale displays of each same partition comprises:
in response to conditions that a grayscale display value of a current frame is equal to that of the next frame of the same partition, that the number of LED lights that need to be lit is 2, and that all LED lights have equal lighting durations, controlling the second active switch, the fourth active switch, and the sixth active switch to be turned on and other active switches to be turned off in the current frame so that the first LED light and the second LED light are lit up; and
controlling the first active switch, the third active switch, and the sixth active switch to be turned on and other active switches to be turned off in the next frame so that the first LED light and the eighth LED light are lit up.

6. The driving method as recited in claim 4, wherein the display device further comprises a brightness detection module, wherein when the next frame is displayed as the current frame, the brightness detection module is configured to detect a brightness value of grayscale display of the current frame; wherein the display device further comprises a compensation signal module configured to output a corresponding compensation signal to the control terminals of the six active switches;
wherein in response to the brightness detection module detecting that the brightness value is lower than a preset value, the driving method further comprises the following operation:
outputting the compensation signal to the control terminal of a corresponding active switch to control the corresponding active switch to be turned on thus increasing the number of LED lights that are lit up.

7. The driving method as recited in claim 1, wherein the operation of obtaining the grayscale values of the next frame of all pixels in the display panel corresponding to the current partition and generating the driving current signal and the control signal comprises:
arranging the grayscale values of all pixels in order, obtaining a median grayscale value, and generating the driving current signal and the control signal based on the median grayscale value.

8. The driving method as recited in claim 1, wherein the operation of obtaining the grayscale values of the next frame of all pixels in the display panel corresponding to the current partition and generating the driving current signal and the control signal comprises:
arranging the grayscale values of all pixels in order, obtaining a maximum grayscale value, and generating the driving current signal and the control signal based on the maximum grayscale value.

9. The driving method as recited in claim 8, wherein the operation of arranging the grayscale values of all pixels in order and obtaining the maximum grayscale value and generating the driving current signal and the control signal based on the maximum grayscale value comprises:
detecting an actual brightness value and increasing a data voltage corresponding to each pixel.

10. The driving method as recited in claim 1, wherein each of the plurality of partitions comprises four LED lights that are sequentially coupled in series, wherein the control module comprises two active switches and respective control signal input terminals; wherein the four LED lights comprise a first LED light, a second LED light, a third LED light, and a fourth LED light; wherein the two active switches comprise a first active switch and a second active switch; wherein the operation of the controlling by the control module the corresponding LED light or lights to be turned on according to the control signal comprises:
when the grayscale values of the pixels corresponding to the backlight are obtained and the driving current signal and the control signal are generated, in response to a condition that only one LED light needs to be lit, generating, by the control module, a corresponding control signal to control the first active switch and the second active switch to be turned on so that the driving current signal is directly input from the first LED light and output through the first active switch and the second active switch, while the remaining three LED lights are short-circuited and are not lit;
in response to a condition in which two LED lights need to be lit, controlling the first active switch to be turned on so that the first LED light and the fourth LED light are lit, while the remaining LED lights do not light up;
in response to a condition in which three LED lights need to be lit, controlling the second active switch to be turned on so that the first LED light, the second LED light, and the third LED light are lit, while the remaining LED light does not light up; and
in response to a condition in which four LED lights need to be lit, controlling the first active switch and the second active switch to be turned off so that the first LED light, the second LED light, the third LED light, and the fourth LED light are all lit.

11. The driving method as recited in claim 4, wherein each of the plurality of partitions further comprises a backup LED light, wherein the operation of inputting the six control signals to the control terminals of the six active switches respectively to control the respective active switches to be turned on or off thereby lighting up the corresponding LED light or lights to be lit up to achieve different grayscale displays in each same partition:
controlling the backup LED light to be used alternately with the first LED light.

12. A display device, comprising a grayscale signal generation module and a driving current generation module;
wherein the grayscale signal generation module is coupled to the driving current generation module;
wherein the control module is coupled to the grayscale signal generation module;
wherein the driving current module is configured to generate a driving current signal based on a grayscale value of the grayscale signal generation module and output the driving current signal to LED lights;
wherein the control module is configured to generate a control signal based on the grayscale value of the grayscale signal generation module to control a number of LED lights that are lit up;
wherein the display device is driven using the following driving method, the driving method comprising:
obtaining grayscale values of a next frame of all pixels in the display panel corresponding to a current partition, and generating a driving current signal and a control signal; and
controlling, by the control module, the corresponding LED light or lights to be turned on according to the control signal;
wherein the driving current signal and the control signal are configured to jointly control a grayscale display of all the pixels of the display panel corresponding to the current partition.

13. The display device as recited in claim 12, wherein the display device further comprises a brightness detection module that is configured to detect a brightness value of grayscale display of the current frame, wherein the brightness detection module is coupled to the grayscale signal generation module;
wherein the display device comprises a first computing module and a second computing module that are each coupled to the brightness detection module;
wherein the first computing module is configured to obtain and calculate an average grayscale value of the grayscale values of all pixels from the grayscale signal generation module;
wherein the second computing module is configured to obtain and calculate differences of the grayscale values of all pixels from the grayscale signal generation module, and obtain a maximum grayscale value;
wherein the driving current module is configured to generate a corresponding driving current signal based on the average grayscale value or the maximum grayscale value, and wherein the control module is configured to generate the control signal to control the number of LED lights that are turned on based on the average grayscale value or the maximum grayscale value.

14. The display device as recited in claim 12, wherein each of the plurality of partitions comprises nine LED lights that are sequentially coupled in series, including a first LED light, a second LED light,..., and a ninth LED light, which are arranged in a grid of three rows and three columns;
wherein the control module comprises six active switches, including a first active switch, a second active switch..., and a sixth active switch;
wherein the at least one control signal comprises six control signals, which are respectively input to the control terminals of the six active switches;
wherein an input terminal of the first active switch is coupled between the first LED light and the second LED light, and wherein an output terminal of the first active switch is coupled between the fifth LED light and the sixth LED light; wherein an input terminal of the second active switch is coupled between the second LED light and the third LED light, and wherein an output terminal of the second active switch is coupled between the fourth LED light and the fifth LED light; wherein an input terminal of the third active switch is coupled between the fifth LED light and the sixth LED light, and wherein an output terminal of the third active switch is coupled between the seventh LED light and the eighth LED light;
wherein an input terminal of the fourth active switch is coupled between the fourth LED light and the fifth LED light, and wherein an output terminal of the fourth active switch is coupled between the eighth LED light and the ninth LED light; wherein an input terminal of the fifth active switch is coupled between the seventh LED light and the eighth LED light, and wherein an output terminal of the fifth active switch is coupled to an output terminal of the ninth LED light; wherein an input terminal of the sixth active switch is coupled between the eighth LED light and the ninth LED light, and wherein an output terminal of the sixth active switch is coupled to the output terminal of the ninth LED light;
wherein the control module comprises six control signal generation units, which are configured to generate respective control signals and output the control signals to the control terminals of the six active switches respectively to control the respective six active switches to be turned on or off thereby lighting up or turning off the corresponding LED light or lights to achieve different grayscale displays in each same partition.

15. The display device as recited in claim 14, wherein the display device comprises a compensation signal module coupled to the brightness detection module; wherein the brightness detection module is configured to detect that the brightness value is less than a preset value and generate a compensation signal and output the compensation signal to the compensation signal module;
wherein the compensation signal module is coupled to the control terminals of the six active switches; wherein the compensation signal module is configured to control the corresponding active switch or switches to be turned on depending on whether the corresponding LED light or lights are lit and depending on the compensation signal.

16. The display device as recited in claim 12, wherein each of the plurality of partitions comprises four LED lights that are sequentially coupled in series; wherein the control module comprises two active switches and respective control signal input terminals; wherein the four LED lights comprise a first LED light, a second LED light, a third LED light, and a fourth LED light; wherein the two active switches comprise a first active switch and a second active switch;
wherein an input terminal of the first active switch is coupled between the first LED light and the second LED light, an output terminal of the first active switch is coupled between the third LED light and the fourth LED light, and wherein a control terminal of the first active switch is configured to receive a first control signal;
wherein an input terminal of the second active switch is coupled between the third LED light and the fourth LED light, an output terminal of the second active switch of the second active switch is coupled to an output terminal of the fourth LED light, and wherein a control terminal of the second active switch is configured to receive a second control signal.

17. The display device as recited in claim 14, wherein each of the plurality of partitions further comprises a backup LED light that is configured to be used alternately with the first LED light.

18. The display device as recited in claim 15, further comprising a compensation signal module coupled to the brightness detection module; wherein the brightness detection module is configured to detect that the brightness value is less than the preset value and generate a compensation signal and output the compensation signal to the compensation signal module;
wherein the compensation signal module is coupled to the control terminals of the two active switches;
wherein the compensation signal module is configured to control the corresponding active switch or switches to turn on depending on whether the corresponding LED light or lights are lit and depending on the compensation signal, or is configured to control a data line to increase a data voltage of each of the corresponding pixel or pixels.

19. A display device, comprising a grayscale signal generation module and a driving current generation module;
wherein the grayscale signal generation module is coupled to the driving current generation module;
wherein the control module is coupled to the grayscale signal generation module;
wherein the driving current module is configured to generate a driving current signal based on a grayscale value of the grayscale signal generation module and output the driving current signal to LED lights;
wherein the control module is configured to generate a control signal based on the grayscale value of the grayscale signal generation module to control a number of LED lights that are lit up;
wherein the display device is driven using the following driving method, the driving method comprising:
calculating and comparing the grayscale values of all pixels against each other to obtain a maximum grayscale value, and generating the driving current signal and the control signal based on the calculated maximum grayscale value; and
controlling, by the control module, the corresponding LED light or lights to be turned on according to the control signal;
wherein the driving current signal and the control signal are configured to jointly control a grayscale display of all the pixels of the display panel corresponding to the current partition.
